# EUROPÄISCHE PATENTSCHRIFT

(11) **EP 2 948 635 B1**
(45) Veröffentlichungstag und Bekanntmachung des Hinweises auf die Patenterteilung: **29.03.2017**
(21) Anmeldenummer: 14703802.0
(22) Anmeldetag: 04.02.2014
(51) Int. Cl.: B23P 15/02, F01D 5/18

(54) **VERFAHREN ZUR NEUHERSTELLUNG EINES DIFFUSORS IN EINEM SCHICHTSYSTEM**
METHODS FOR THE NEW MANUFACTURE OF A DIFFUSER IN A LAYER SYSTEM
PROCÉDÉ DE RÉUSINAGE D'UN DIFFUSEUR DANS UN ENSEMBLE DE COUCHE

(30) Priorität: 06.03.2013 EP 13157912
(43) Veröffentlichungstag der Anmeldung: 02.12.2015
(73) Patentinhaber: Siemens Aktiengesellschaft, 80333 München (DE)
(72) Erfinder: MENKE, Christian, 45329 Essen (DE); SETTEGAST, Silke, 10439 Berlin (DE); VOSBERG, Volker, 45476 Mülheim an der Ruhr (DE)
(86) Internationale Anmeldenummer: PCT/EP2014/052133
(87) Internationale Veröffentlichungsnummer: WO 2014/135324

(56) Entgegenhaltungen:
- EP-A1- 1 681 128
- EP-A1- 1 712 739
- EP-A2- 2 559 855
- US-A1- 2012 167 389

## Beschreibung

Die Erfindung betrifft das Herstellen von einem Diffusor in einem Schichtsystem.

Bauteile, wie Turbinenschaufel der ersten und zweiten Reihe werden bei sehr hohen Temperaturen eingesetzt und zum Schutz vor Oxidation/Korrosion und Wärme werden sie mit metallischen und/oder thermischen Schichten versehen.

Insbesondere bei Turbinenschaufeln weisen diese noch zusätzliche Kühlluftlöcher aus, aus denen Kühlluft herausströmt.

Diese Kühlluftlöcher weisen an ihrer Oberfläche an der äußersten Schicht einen Diffusor auf, damit sich eine schützende Luftschicht über die Oberfläche der Turbinenschaufel legt. Der Diffusor reicht durch die Schichten bis in das Substrat hinein. Da der Diffusor eine Verbreiterung des zylindrischen unteren Anteils darstellt muss sehr viel Material abgetragen werden.

Die US 2012/167389 A1 offenbart ein Verfahren zur Neuherstellung eines Durchgangslochs (120) in ein Schichtsystem aus metallischem Substrat (100) und zumindest einer Schicht (200) mit einem äußeren Diffusor (126), bei dem in das Substrat (100) zuerst ein Durchgangsloch (122) mit einem Querschnitt, insbesondere mit einem konstantem Querschnitt, über die Dicke des Substrats (100) eingebracht wird, bei dem das Substrat (100) erst dann beschichtet wird, insbesondere mit einer inneren metallischen Schicht (200) und/oder einer äußeren keramischen Schicht (200) und wobei ein Diffusoranteil des Substrat eine Verbreiterung des Durchgangslochs (120) an der Oberfläche (104) darstellt, und wobei der Diffusor (126) eine unsymmetrische Verbreiterung des oberen Teils des Durchgangslochs (120) darstellt.

Es ist daher Aufgabe der Erfindung ein Verfahren aufzuzeigen, mit dem dies verbessert durchgeführt werden kann.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können um weitere Vorteile zu erzielen.

Durch das Verfahren können solche Diffusoren schneller hergestellt werden und auch die Zwischenschichtanbindung der Schichten untereinander und/oder mit dem Substrat wird deutlich geringer belastet.

Es zeigen:
- Figur 1, 2: ein Verfahren aus dem Stand der Technik,
- Figur 3, 4: ein erfindungsgemäße Verfahren,
- Figur 5: eine Liste von Superlegierung und
- Figur 6: eine Turbinenschaufel.

Die Figuren und die Beschreibung stellen nur Ausführungsbeispiele der Erfindung dar.

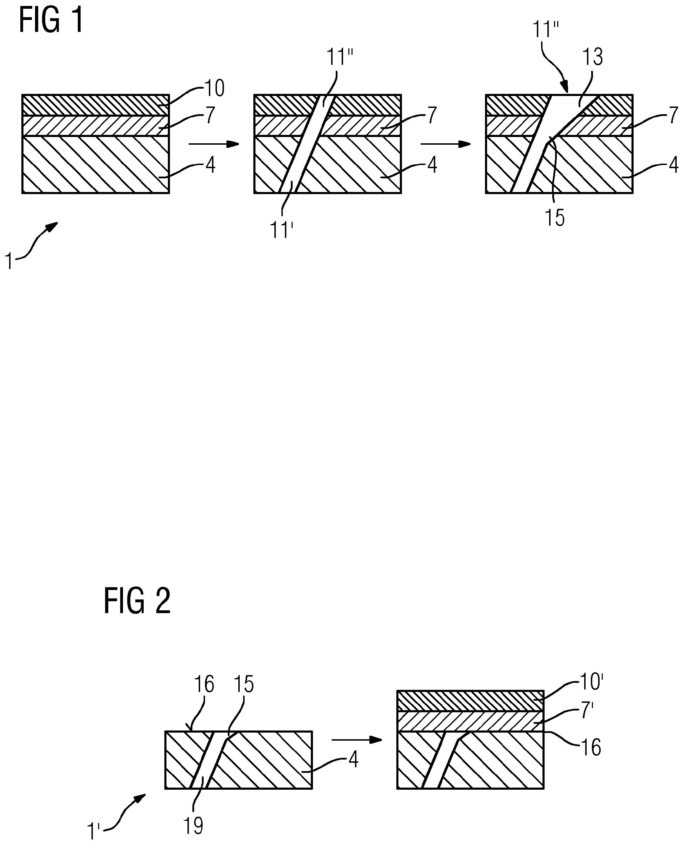

In Figur 1 ist ein Schichtsystem 1 und ein Herstellungsverfahren nach dem Stand der Technik gezeigt, das ein Substrat 4 mit einer inneren Schicht 7 und einer äußersten Schicht 10 aufweist.

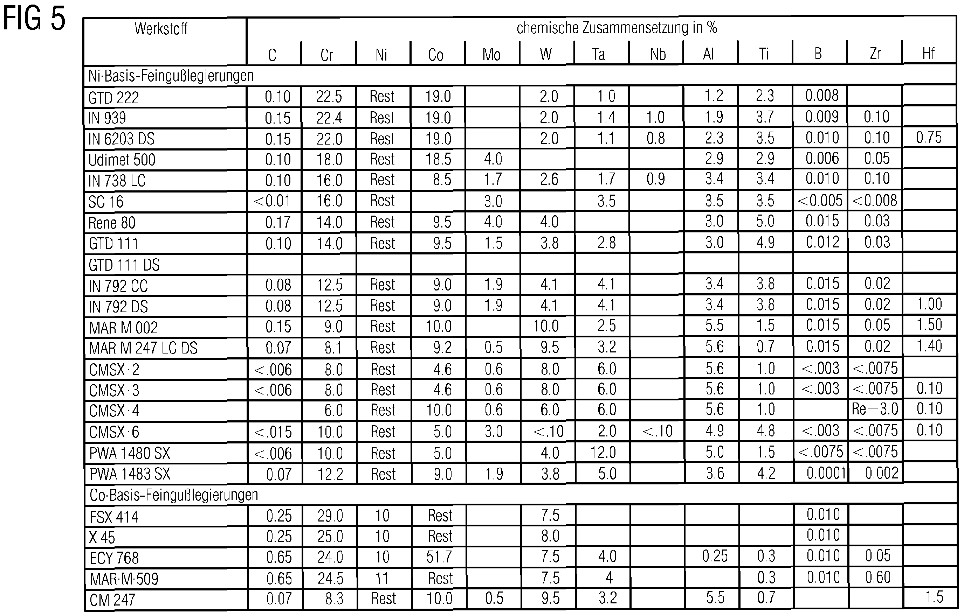

Dies ist bei Turbinenschaufeln 120, 130 (Fig. 5) ein metallisches Substrat 4, eine metallische Haftvermittlerschicht (MCrAlX) mit einer optional vorhandenen Aluminiumoxidschicht darauf und einer äußersten keramischen Schicht 10.

Zur Herstellung eines Diffusors 13 wird zuerst ein zylindrisches Loch 11', 11" durch die Schichten 7, 10 und durch das Substrat 4 erzeugt.

Der Querschnitt des Lochs 11', 11" kann auch eine andere Geometrie aufweisen, aber zumindest ist er über die gesamte Länge nach dem ersten Herstellungsschritt über die Tiefe gesehen konstant.

Ein oberer Teil 11" des Durchgangslochs 11', 11" wird im Bereich der Schichten 7, 10 und des Substrats 4 verbreitert, so dass ein Diffusor 13 entsteht, wie er rechts in Figur 1 dargestellt ist. Der Diffusor 13 weist auch einen Diffusoranteil 15 im Substrat 4 auf.

Figur 2 zeigt ein Bauteil 1' nach einem Einsatz und nachdem Schichten entfernt wurden.

Eine nach Figur 1 hergestellte Turbinenschaufel 120, 130 kann nach dem Einsatz gemäß dem Stand der Technik wieder verwendet werden, wobei zuerst die Schichten 7, 10 entfernt werden, das Substrat 4 inspiziert und ggf. überarbeitet wird und dann neue Schichten 7, 10 aufgebracht werden.
Das Substrat 4 weist daher schon an seiner Oberfläche 16 den Diffusoranteil 15 des Durchgangslochs 10 auf, das von der erstmaligen Herstellung des Diffusors 13 (Fig. 1) herrührt.

Dann werden Schichten 7', 10' aufgebracht, die sich auch in dem Bereich des Diffusors niederschlagen (hier im Bereich 15). Dann wird der Overspray entfernt oder es werden geeignete Maßnahmen getroffen um das Loch 10 durch Stopfen zu schützen, die nach dem Beschichten entfernt werden und der Diffusor 13 entsprechend seiner Endgeometrie geformt wird.

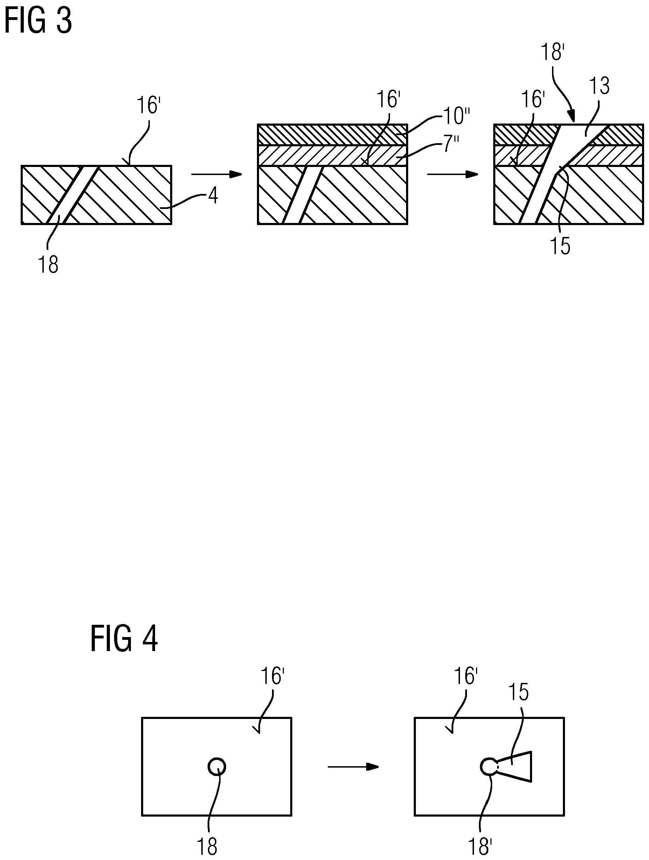

In Figur 3 ist ein erfindungsgemäßes Verfahren zur Neuherstellung eines Durchgangslochs 18' mit Diffusor 13 dargestellt.
In das Substrat 4 wird ein Durchgangsloch 18 hergestellt, das insbesondere rotationssymmetrisch ist oder über seine Tiefe gesehen einen konstanten Querschnitt aufweist. Dies kann durch EDM oder Laserbearbeitung erfolgen.

Das Substrat 4 weist aber im Bereich seiner Oberfläche 16' keine Verbreiterung auf wie beim wiederaufbereiten (Refurbishment) Bauteil 1' gemäß Figur 2.

Erst dann werden Schichten 7" (metallisch, ganz vorzugsweise MCrAlX) und 10" (Keramik) aufgebracht.

Das Material der Schichten 7", 10" dringt in das Loch 18 ein.

Erst dann wird durch diese Schichten 7", 10" der Diffusor 13 erzeugt und erstmalig wird noch ein Diffusoranteil 15 des Diffusors 13 im Substrat 4 erzeugt, also Material des Substrats 4 für den Diffusor 13 abgetragen.
Dies erfolgt vorzugsweise durch Laserbearbeitung.

Eine Aufsicht auf die Oberfläche 16' ist in Figur 4 gezeigt. Links ist der ursprüngliche Verlauf (gemäß Figur 3 ganz links) des Durchgangslochs 18 an der Oberfläche 16' vor der Verbreiterung (Fig. 4 rechts) zur Herstellung des Diffusors 13.

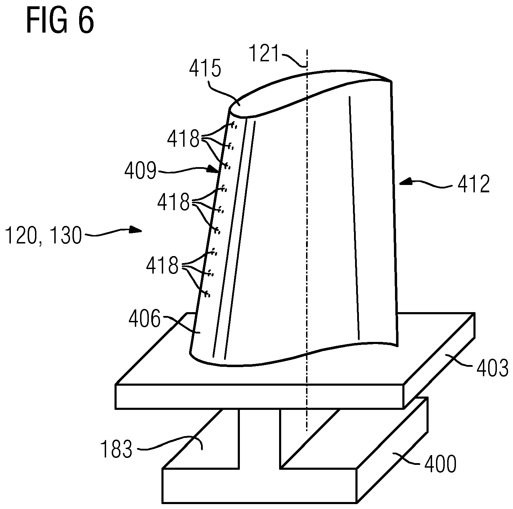

Ein solches Bauteil 1, 120, 130 weist vorzugsweise eine nickel- oder kobaltbasierte Superlegierung auf, insbesondere gemäß Figur 5 und stellt vorzugsweise eine Turbinenschaufel gemäß Figur 6 dar.

## Patentansprüche

1. Verfahren
zur Neuherstellung eines Durchgangslochs (18') in ein Schichtsystem aus metallischem Substrat (4) und zumindest einer Schicht (7", 10") mit einem äußeren Diffusor (13),
bei dem in das Substrat (4) zuerst ein Durchgangsloch (18) mit einem Querschnitt,
insbesondere mit einem konstantem Querschnitt,
über die Dicke des Substrats (4) eingebracht wird,
bei dem das Substrat (4) erst dann beschichtet wird, insbesondere mit einer inneren metallischen Schicht (7") und/oder
einer äußeren keramischen Schicht (10")
und
dann in einem letzten Bearbeitungsschritt ein Diffusor (13) in die Schichten (7'', 10") und in das Substrat (4) eingebracht wird,
wobei erstmalig für den Diffusor (13) zusätzliches Material in einem Diffusoranteil (15) des Substrats (4) entfernt wird,
wobei der Diffusoranteil (15) eine Verbreiterung des Durchgangslochs (18) an der Oberfläche (16') darstellt, und wobei der Diffusor (13) eine unsymmetrische Verbreiterung des oberen Teils des Durchgangslochs (18) darstellt.

2. Verfahren nach Anspruch 1,
bei dem ein metallisches Substrat (4) bearbeitet wird.

3. Verfahren nach einem oder beiden der Ansprüche 1 oder 2, bei dem zumindest eine Schicht (10") eine keramische Schicht darstellt.

4. Verfahren nach einem oder mehreren der vorherigen Ansprüche 1, 2 oder 3,
bei dem ein Laserabtragungsverfahren verwendet wird, insbesondere unter Verwendung von deutlich unterschiedlichen Pulsfrequenzen.

5. Verfahren nach einem oder mehreren der vorherigen Ansprüche 1, 2, 3 oder 4,
bei dem das Durchgangsloch (18) mit Pulsdauern im Millisekundenbereich hergestellt wird,
insbesondere größer gleich 1ms.

6. Verfahren nach einem oder mehreren der vorherigen Ansprüche,
bei dem der Diffusor (13) oder zumindest die Entfernung der keramischen Schichten und des Teils (15) mit Pulsdauern im Nanosekundenbereich oder Subnanosekundenbereich,
insbesondere kleiner gleich 800ns,
ganz insbesondere kleiner gleich 600ns,
erfolgt.

## Claims

1. Method
for the new production of a through hole (18') in a layer system made up of a metallic substrate (4) and at least one layer (7", 10") with an outer diffuser (13),
in which a through hole (18) having a cross section,
in particular a constant cross section,
is first introduced into the substrate (4) over the thickness of the substrate (4),
in which the substrate (4) is only then coated,
in particular with an inner metallic layer (7") and/or
an outer ceramic layer (10"),
and
then, in a last machining step, a diffuser (13) is introduced into the layers (7", 10") and into the substrate (4) wherein, first, for the diffuser (13) additional material is removed in a diffuser portion (15) of the substrate (4), wherein the diffuser portion (15) represents a widening of the through hole (18) at the surface (16'),
and wherein the diffuser (13) represents an asymmetric widening of the upper part of the through hole (18).

2. Method according to Claim 1,
in which a metallic substrate (4) is machined.

3. Method according to one or both of Claims 1 and 2,
in which at least one layer (10") is a ceramic layer.

4. Method according to one or more of the preceding Claims 1, 2 and 3,
in which a laser removal method is used,
in particular using substantially different pulse frequencies.

5. Method according to one or more of the preceding Claims 1, 2, 3 and 4,
in which the through hole (18) is produced using pulse durations in the millisecond range,
in particular greater than or equal to 1 ms.

6. Method according to one or more of the preceding claims,
in which pulse durations in the nanosecond range or the sub-nanosecond range,
in particular less than or equal to 800 ns,
most particularly less than or equal to 600 ns,
are used to create the diffuser (13) or at least to remove the ceramic layers and the portion (15).

## Revendications

1. Procédé
de refabrication d'un trou (18') traversant dans un système stratifié composé d'un substrat (4) métallique et d'au moins une couche (7", 10") ayant un diffuseur (13) extérieur,
dans lequel on ménage dans le substrat (4) d'abord un trou (18) traversant ayant une section transversale, notamment une section transversale constante,
sur l'épaisseur du substrat (4),
dans lequel on revêt le substrat (4) seulement ensuite, notamment d'une couche (7") métallique intérieure et/ou d'une couche (10") céramique extérieure et
on ménage ensuite dans un dernier stade de traitement un diffuseur (13) dans les couches (7", 10") et dans le substrat (4),
dans lequel on élimine seulement pour la première fois pour le diffuseur (13) de la matière supplémentaire dans une partie (15) de diffuseur du substrat (4),
dans lequel la partie (15) de diffuseur représente un élargissement du trou (18) traversant à la surface (16'),
et dans lequel le diffuseur (13) représente un élargissement dissymétrique de la partie supérieure du trou (18) traversant.

2. Procédé selon la revendication 1, dans lequel on traite un substrat (4) métallique.

3. Procédé suivant l'une ou les deux des revendications 1 ou 2, dans lequel au moins une couche (10") représente une couche céramique.

4. Procédé suivant l'une ou plusieurs des revendications précédentes 1, 2 ou 3,
dans lequel on utilise le procédé d'enlèvement de matière par laser, en utilisant notamment des fréquences d'impulsion nettement différentes.

5. Procédé suivant l'une ou plusieurs des revendications précédentes 1, 2, 3 ou 4, dans lequel on produit le trou (18) traversant par des durées d'impulsion de l'ordre de la milliseconde,
notamment supérieures ou égales à 1 ms.

6. Procédé suivant l'une ou plusieurs des revendications précédentes,
dans lequel le diffuseur (13) ou au moins l'élimination des couches céramiques et de la partie (15) s'effectue à des durées d'impulsion de l'ordre de la nanoseconde ou de l'ordre de la sous nanoseconde,
notamment inférieures ou égales à 800 ns,
d'une manière tout à fait particulière inférieures ou égales à 600 ns.
